(19) Europäisches Patentamt
European Patent Office
Office européen des brevets

(11) **EP 4 424 521 A1**

(12) **EUROPEAN PATENT APPLICATION**
published in accordance with Art. 153(4) EPC

(43) Date of publication:
**04.09.2024 Bulletin 2024/36**

(21) Application number: **22886459.1**

(22) Date of filing: **06.09.2022**

(51) International Patent Classification (IPC):
***B60B 17/00*** (2006.01)

(52) Cooperative Patent Classification (CPC):
**B60B 17/00; Y02T 10/86**

(86) International application number:
**PCT/JP2022/033336**

(87) International publication number:
**WO 2023/074125 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.10.2021 JP 2021177041**

(71) Applicant: **NIPPON STEEL CORPORATION**
**Tokyo 100-8071 (JP)**

(72) Inventors:
• **UENISHI, Ayuni**
  **Tokyo 1008071 (JP)**

• **KATO, Takanori**
  **Tokyo 1008071 (JP)**
• **YAMAMURA, Yoshinari**
  **Tokyo 1008071 (JP)**
• **ABE, Shingo**
  **Tokyo 1008071 (JP)**
• **NOGUCHI, Jun**
  **Tokyo 1008071 (JP)**

(74) Representative: **Zimmermann & Partner**
**Patentanwälte mbB**
**Postfach 330 920**
**80069 München (DE)**

(54) **WHEEL FOR RAILWAY VEHICLE**

(57)     A wheel (100) includes a boss (10), a rim (20), and a web (30). The rim (20) includes a tread (21) and a flange (22). A center (Cb) of the boss (10) in an axial direction of the wheel (100) is disposed closer to the flange (22) than a center (Cr) of the rim (20) in the axial direction. The web (30) has a plate-thickness center line (A) having a linear shape when the wheel (100) is viewed in a longitudinal section. In a case where an angle formed by the plate-thickness center line (A) with the axial direction is taken as $\alpha$, a distance in the axial direction from a side face (24) of the rim (20) to an outer end (Aa) of the plate-thickness center line (A) is taken as Pw, a length of the rim (20) in the axial direction is taken as Wr, and Pw/Wr is taken as L, the wheel (100) satisfies $L \geq 0.053\alpha - 3.8626$, where the angle $\alpha$ is 90° or less.

EP 4 424 521 A1

100

Wb

Cb

X

10

43

44

431

441

Ab

α

30

A

32

31

Aa

421

411

42

41

20

24

23

21 Cr

Pw

22

Wr

Inner Side

Radial Direction

Outer Side

Counter-Flange Direction ←——→ Flange Direction

Axial Direction

FIG. 1

**Description**

TECHNICAL FIELD

The present disclosure relates to a wheel to be used in a railway vehicle.

BACKGROUND ART

As one way of braking a railway vehicle, a tread brake is known. The tread brake is a braking method in which a brake shoe is pressed against a tread of a wheel of a railway vehicle to generate a frictional force between the tread and the brake shoe, thus applying a brake to the railway vehicle by the frictional force.

In a case where a brake is applied to a railway vehicle by using the tread brake, frictional heat is produced between the tread and the brake shoe and hence, temperature rises in the wheel, particularly in a rim that forms an outer circumferential portion of the wheel. This causes thermal expansion of the rim, so that thermal stress occurs in the rim. To reduce such thermal stress, various shapes of the wheel have been proposed.

Patent Literature 1, for example, proposes a wheel including a rim that forms an outer circumferential portion of the wheel, a boss that forms an inner circumferential portion of the wheel, and a web having a substantially S shape in cross section. In the wheel of Patent Literature 1, to reduce thermal stress in the web and the rim, each of the displacement amount of the rim relative to the boss and the displacement amount of the web on the rim side is set to a predetermined value or more. The displacement amount of the rim relative to the boss is a distance between a perpendicular line drawn from the end of a curve-shaped plate-thickness center line of the web on the rim side to the axial centerline of the wheel and a perpendicular line drawn from the end of the plate-thickness center line on the boss side to the axial centerline of the wheel. The displacement amount of the web on the rim side is a distance between a perpendicular line drawn from the end of the plate-thickness center line on the rim side to the axial centerline of the wheel and a perpendicular line drawn from the center of the rim in the axial direction of the wheel to the axial centerline of the wheel.

Patent Literature 2, for example, proposes a wheel in which a web is caused to have a curved shape in cross section to reduce thermal stress in a rim. In the wheel of Patent Literature 2, the web has a so-called bell shape in cross section. Both ends of a curve-shaped plate-thickness center line of the web are disposed on the same side with respect to the center plane (plane perpendicular to the axial centerline of the wheel) of the wheel. In contrast, the midpoint of the plate-thickness center line is disposed on the side opposite to both ends of the plate-thickness center line with respect to the center plane of the wheel.

CITATION LIST

PATENT LITERATURE

Patent Literature 1: Japanese Patent Application Publication No. 10-119503
Patent Literature 2: Japanese Translation of PCT International Application Publication No. 2009-545484

SUMMARY OF INVENTION

TECHNICAL PROBLEM

During production, compressive residual stress is usually applied to a rim of a wheel to be used in a railway vehicle by subjecting the rim to heat treatment or the like. However, when a brake is applied to a railway vehicle with a tread brake, the compressive residual stress in the rim may be converted to tensile residual stress due to plastic deformation caused when high thermal stress occurs in the rim. Specifically, during braking of the railway vehicle, the temperature of the rim rises due to friction between the tread and the brake shoe, causing thermal expansion in the rim, while thermal expansion of the rim is inhibited on the inner peripheral side of the wheel due to a smaller rise in temperature, so that compressive stress particularly in the circumferential direction of the wheel occurs in the rim. When this compressive stress exceeds a yield point, the rim is plastically deformed and, after the rim is cooled, compressive stress is converted to tensile stress, and acts on the rim as residual stress. When cracks occur in the tread while tensile residual stress is occurring in the rim, there may be a possibility of cracks that occur in the tread propagating to the inside of the wheel. Therefore, when a tread brake is used to apply a brake to the railway vehicle, it is necessary to reduce thermal stress occurring in the rim due to the tread brake to suppress occurrence of tensile residual stress in the rim.

Each of the wheels of Patent Literatures 1 and 2 includes the web having a curved shape. Such a configuration can relax constraint by the web in regard to thermal expansion of the rim. Therefore, in each of the wheels of Patent Literatures 1 and 2, it can be considered that thermal stress occurring in the rim during braking of the railway vehicle is reduced and hence, tensile residual stress is less likely to occur in the rim. However, in a case where the web is bent, there is a problem of an increase in the weight of the wheel.

An objective of the present disclosure is to provide a wheel that can achieve both a reduction in weight and a suppression of the occurrence of tensile residual stress in the rim.

SOLUTION TO PROBLEM

A wheel according to the present disclosure is to be used in a railway vehicle. The wheel includes a boss, a rim, and a web. The boss forms an inner circumferential portion of the wheel. An axle of the railway vehicle is to be inserted into the boss. The rim forms an outer circumferential portion of the wheel. The rim includes a tread and a flange. The tread comes into contact with a top surface of a rail on which the railway vehicle travels. The flange protrudes outward from the tread in a radial direction of the wheel. The web having an annular shape connects the boss and the rim. A center of the boss in an axial direction is disposed closer to the flange in the axial direction than a center of the rim in the axial direction. The axial direction is a direction in which a central axis of the wheel extends. The web has a plate-thickness center line having a linear shape when the wheel is viewed in a longitudinal section. In a case where an angle formed by the plate-thickness center line with the axial direction is taken as $\alpha$, of both side faces of the rim in the axial direction, a distance in the axial direction from a side face on a side opposite to the flange to an outer end of the plate-thickness center line in the radial direction is taken as Pw, a length of the rim in the axial direction is taken as Wr, and Pw/Wr is taken as L, the wheel according to the present disclosure satisfies the following Formula (1).

$$L \geq 0.053\alpha - 3.8626 \ldots (1)$$

where angle $\alpha$ is 90° or less. The angle $\alpha$ is defined to be 90° when the plate-thickness center line is parallel to the radial direction, and the angle $\alpha$ is defined to be less than 90° when the plate-thickness center line is inclined with respect to the radial direction due to rotation of the plate-thickness center line about an inner end in the radial direction from a 90° position toward the side opposite to the flange.

ADVANTAGEOUS EFFECTS OF INVENTION

According to the present disclosure, it is possible to achieve both a reduction in weight of the wheel and a suppression of the occurrence of tensile residual stress in the rim.

BRIEF DESCRIPTION OF DRAWINGS

[FIG. 1] FIG. 1 is a longitudinal sectional view of a wheel according to an embodiment.
[FIG. 2] FIG. 2 is a diagram schematically illustrating a wheel including a web having an S shape in cross section.
[FIG. 3] FIG. 3 is a graph illustrating the relationship between plate angle and residual stress in the rim in each of Examples and Comparative Examples, which have the same value of ratio of web position to rim width.
[FIG. 4] FIG. 4 is a graph illustrating the relationship between ratio of web position to rim width and residual stress in the rim in Examples, which have the same plate angle.
[FIG. 5] FIG. 5 is a diagram illustrating, in an exaggerated manner, deformation occurring in a wheel during braking in an Example.
[FIG. 6] FIG. 6 is a diagram illustrating, in an exaggerated manner, deformation occurring in a wheel during braking in a Comparative Example.
[FIG. 7] FIG. 7 is a graph illustrating a limit line up to which residual stress in the rim is not converted to tensile residual stress, in the relationship between plate angle and ratio of web position to rim width.

DESCRIPTION OF EMBODIMENTS

A wheel according to an embodiment (first configuration) is to be used in a railway vehicle. The wheel includes a boss, a rim, and a web. The boss forms an inner circumferential portion of the wheel. An axle of the railway vehicle is to be inserted into the boss. The rim forms an outer circumferential portion of the wheel. The rim includes a tread and a flange. The tread comes into contact with a top surface of a rail on which the railway vehicle travels. The flange protrudes outward from the tread in a radial direction of the wheel. The web having an annular shape connects the boss and the rim. A center of the boss in an axial direction is disposed closer to the flange in the axial direction than a center of the rim in the axial direction. The axial direction is a direction in which a central axis of the wheel extends. The web has a plate-thickness center line having a linear shape when the wheel is viewed in a longitudinal section. In a case where an angle formed by the plate-thickness center line with the axial direction is taken as $\alpha$, of both side faces of the rim in the axial direction, a distance in the axial direction from a side face on a side opposite to the flange to an outer end of the plate-thickness center line in the radial direction is taken as Pw, a length of the rim in the axial direction is taken as Wr, and Pw/Wr is taken as L, the wheel according to the first configuration satisfies the following Formula (1).

$$L \geq 0.053\alpha - 3.8626 \ldots (1)$$

where the angle $\alpha$ is 90° or less. The angle $\alpha$ is defined to be 90° when the plate-thickness center line is parallel to the radial direction, and the angle $\alpha$ is defined to be less than 90° when the plate-thickness center line is inclined with respect to the radial direction due to rotation of the plate-thickness center line about an inner end in the radial direction from a 90° position toward the side opposite to the flange.

In the wheel according to the first configuration, the plate-thickness center line of the web has a linear shape and has no inflection point when the wheel is viewed in its longitudinal section. In other words, the web connects the boss and the rim without being substantially bent. As a result, compared with the case where the web is bent, the weight of the web can be reduced. Therefore, a reduction in weight of the wheel can be achieved.

When a brake shoe of a tread brake is pressed against a tread of a rim of a wheel, producing frictional heat, thermal expansion occurs in the rim. The web constrains this thermal expansion of the rim, so that thermal stress occurs in the rim. When thermal stress in the rim becomes excessively large, the rim is plastically deformed during braking of the railway vehicle, so that tensile residual stress in the circumferential direction of the wheel may occur after the rim is cooled. In contrast, the wheel according to the first configuration is formed into a shape that can relax constraint on the rim by the web. More specifically, in the wheel according to the first configuration, dimensions of respective components are set to satisfy the Formula (1) for which both the angle of the plate-thickness center line of the web relative to the axial direction of the wheel and the position of the plate-thickness center line relative to the rim are taken into account, on the assumption that the center of the boss is disposed closer to the flange than the center of the rim. Such a configuration can effectively relax constraint on the rim by the web and hence, thermal expansion of the rim during braking can be tolerated. Therefore, thermal stress in the rim can be reduced, thus suppressing plastic deformation of the rim. As a result, when the rim is cooled after a brake is applied to the railway vehicle, it is possible to suppress a situation in which residual stress in the rim is converted to tensile residual stress.

In this manner, with the wheel according to the first configuration, it is possible to achieve both a reduction in weight of the wheel and a suppression of the occurrence of tensile residual stress in the rim.

As described above, in the wheel according to the first configuration, the plate-thickness center line of the web has a linear shape and has no inflection point when the wheel is viewed in its longitudinal section. In this case, stress concentration is less likely to occur in the web. As a result, it is possible to reduce thermal stress occurring in the web during braking of the railway vehicle.

With the first configuration, the angle of the plate-thickness center line of the web relative to the axial direction of the wheel is 90° or less. As a result, the web is not inclined toward the inner side of the track as the web extends outward in the radial direction. Therefore, it is possible to ensure rigidity of the web against a load received by the wheel from the rail in the axial direction of the wheel, that is, a load (lateral force) received by the wheel from the inner side of the track, when the railway vehicle passes a curve. As a result, it is possible to reduce stress occurring in the web.

The angle $\alpha$ formed by the plate-thickness center line with the axial direction is preferably less than 90° (second configuration).

In the second configuration, the angle of the plate-thickness center line of the web relative to the axial direction of the wheel is less than 90°. In this case, the web is inclined toward the outer side of the track as the web extends outward in the radial direction. Therefore, it is possible to increase rigidity of the web against a lateral force and hence, it is possible to further reduce stress occurring in the web. Further, there is a reduced necessity of increasing the plate thickness of the web to ensure rigidity of the web against a lateral force and hence, it is possible to achieve a further reduction in weight of the web and the wheel.

The web may have a plate thickness that decreases as the web extends outward in the radial direction until a point inward from the outer end of the plate-thickness center line and has a minimum plate thickness at the point (third configuration).

An embodiment of the present disclosure will be described below with reference to the drawings. In the drawings, the same or equivalent components will be denoted by the same reference characters and repetitive description thereof will not be made.

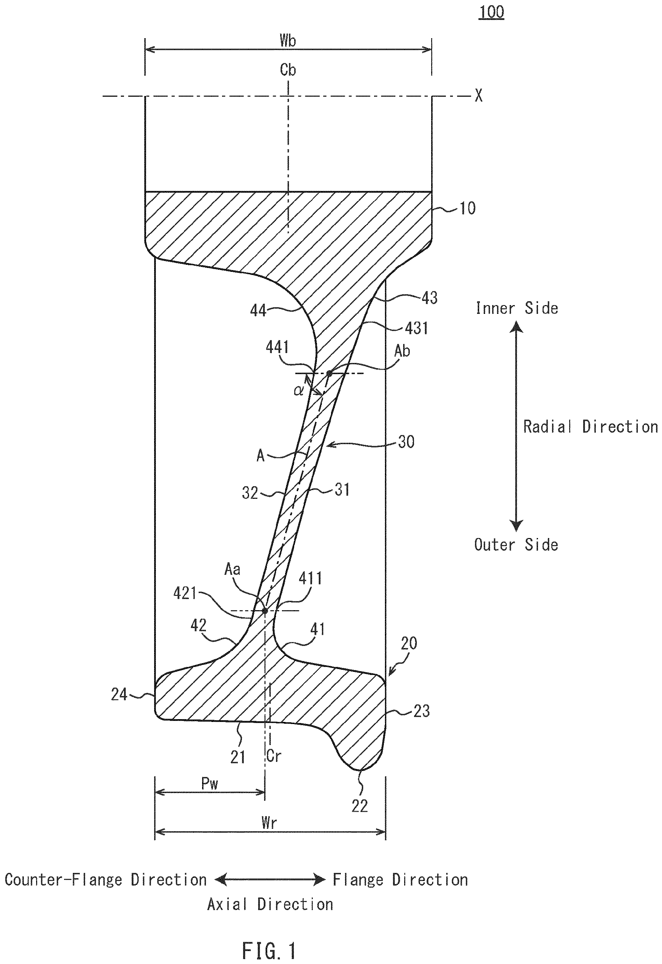

FIG. 1 is a longitudinal sectional view of a wheel 100 according to the present embodiment. The longitudinal section refers to a cross section of the wheel 100 taken along a plane including a central axis X of the wheel 100. The longitudinal section of the wheel 100 is symmetric about the central axis X, and thus FIG. 1 illustrates the wheel 100 on one side of the central axis X only. Hereinafter, a direction in which the central axis X of the wheel 100 extends will be referred to as an axial direction, and a radial direction and a circumferential direction of the wheel 100 will be simply referred to as a radial direction and a circumferential direction respectively.

Referring to FIG. 1, the wheel 100 is to be used in a railway vehicle. The wheel 100 includes a boss 10, a rim 20, and a web 30.

The boss 10 forms an inner circumferential portion of the wheel 100. The boss 10 has a substantially cylindrical shape around the central axis X as the axial centerline. An axle of the railway vehicle (not illustrated in the drawing) is to be inserted into the boss 10.

The rim 20 forms an outer circumferential portion of the wheel 100. The rim 20 is disposed outside the boss 10 in the radial direction. The rim 20 includes a tread 21 and a flange 22. The tread 21 and the flange 22 are provided on an outer peripheral surface of the rim 20.

The tread 21 faces outward in the radial direction. The tread 21 is to come into contact with a top surface of a rail on which the railway vehicle travels. Typically, a diameter of the tread 21 gradually increases toward the flange 22. The tread 21 may be a conical tread or an arc tread, for example.

The flange 22 is provided at one end of the rim 20 in the axial direction. The flange 22 protrudes outward from the tread 21 in the radial direction. When the railway vehicle travels on right and left rails, the flange 22 is positioned inward from the rails. Hereinafter, in the axial direction of the wheel 100, a direction toward a side on which the flange 22 is disposed will be referred to as a flange direction, and a direction opposite to the flange direction will be referred to as a counter-flange direction.

The rim 20 further includes both side faces 23 and 24 in the axial direction. The side face 23 is a side face on the flange 22 side, and the side face 24 is a side face on the side opposite to the flange 22. In other words, the side face 23 is disposed on the flange direction side with respect to the side face 24. The side face 24 is disposed on the counter-flange direction side with respect to the side face 23 with the tread 21 and the flange 22 interposed between the side face 24 and the side face 23.

The rim 20 is disposed on the counter-flange direction side with respect to the boss 10. In other words, a center Cb of the boss 10 is disposed closer to the flange 22 in the axial direction than a center Cr of the rim 20. When the railway vehicle travels, the center Cr of the rim 20 is positioned so as to be outward from the center Cb of the boss 10 in a track-width direction.

The web 30 has an annular shape. The web 30 connects the boss 10 and the rim 20. The web 30 has a plate thickness that is smaller as a whole than each of a boss width Wb and a rim width Wr. The plate thickness of the web 30 is large on its boss 10 side and small on its rim 20 side. The boss width Wb refers to the length of the boss 10 in the axial direction. The rim width Wr refers to the length of the rim 20 in the axial direction, and is the maximum distance from the side face 23 to the side face 24 of the rim 20 in the axial direction.

The web 30 includes both side faces 31 and 32 in the axial direction. The side face 31 is a side face on the flange 22 side, and the side face 32 is a side face on the side opposite to the flange 22. In other words, the side face 31 is disposed on the flange direction side with respect to the side face 32. The side face 32 is disposed on the counter-flange direction side with respect to the side face 31. The side faces 31 and 32 are preferably inclined with respect to the radial direction when the wheel 100 is viewed in its longitudinal section. The side faces 31 and 32 are respectively connected to the rim 20 via connecting parts 41, 42. The side faces 31 and 32 are respectively connected to the boss 10 via connecting parts 43, 44. Each of the connecting parts 41, 42, 43, and 44 has a substantially arc shape, for example, when the wheel 100 is viewed in its longitudinal section.

In the present embodiment, one of an end (R stop) 411 of the connecting part 41 on the web 30 side and an end (R stop) 421 of the connecting part 42 on the web 30 side that is positioned more inward than the other in the radial direction is defined to be an outer circumference end of the web 30. In addition, one of an end (R stop) 431 of the connecting part 43 on the web 30 side and an end (R stop) 441 of the connecting part 44 on the web 30 side that is positioned more outward than the other in the radial direction is defined to be an inner circumference end of the web 30. The outer circumference end of the web 30 can be regarded as a root of the web 30 for the rim 20. The inner circumference end of the web 30 can be regarded as a root of the web 30 for the boss 10. In the present embodiment, the end 411 of the connecting part 41 and the end 441 of the connecting part 44 are the outer circumference end and the inner circumference end of the web 30, respectively.

The plate thickness of the web 30 decreases as the web 30 extends outward in the radial direction until a position inward from the outer circumference end 411, and the plate thickness of the web 30 is minimized at the position. The web 30 has its minimum plate thickness at a portion inward from the outer circumference end 411 in the radial direction and in a vicinity of the outer circumference end 411. A position at which the plate thickness of the web 30 is minimized substantially coincides with a position at which a bending stress produced in the web 30 by a bending load received by the wheel 100 from a rail when the railway vehicle passes a curve is minimized. For example, the plate thickness of the web 30 can be minimized at a position that is 5 mm to 30 mm inward from the outer circumference end 411 in the radial direction.

The web 30 has a plate-thickness center line A. The plate-thickness center line A is a line obtained by connecting centers of the plate thickness of the web 30 extending from the boss 10 to the rim 20 when the wheel 100 is viewed in its longitudinal section. The plate-thickness center line A passes midpoints between the side faces 31 and 32 and extends from the boss 10 side to the rim 20 side. The plate-thickness center line A has a linear shape when the wheel 100 is viewed in its longitudinal section. A linear shape herein includes not only a perfect straight line but also a very gentle arc having a curvature radius of, for example, 1000 mm or more, or even a polygonal chain. In other words, the plate-thickness center line A is any line that can be recognized as a substantially straight line when the wheel 100 is viewed in its longitudinal section. Since the plate-thickness center line A has a linear shape when the wheel 100 is viewed in its longitudinal section, the web 30 has a substantially flat disk shape and is not substantially bent in the axial direction.

The plate-thickness center line A has an outer end Aa in the radial direction and an inner end Ab in the radial direction. The outer end Aa is a point at which the plate-thickness center line A is connected to a straight line that passes the outer circumference end 411 of the web 30 and extends in the axial direction. The inner end Ab of the plate-thickness center line A is a point at which the plate-thickness center line A is connected to a straight line that passes the inner circumference end 441 of the web 30 and extends in the axial direction.

The position of the web 30 relative to the rim 20 is determined by the position of the outer end Aa of the plate-thickness center line A in the axial direction. In the present embodiment, of both side faces 23 and 24 of the rim 20, a distance in the axial direction from the side face 24 on the counter-flange direction side to the outer end Aa of the plate-thickness center line A is defined to be a web position Pw. When the ratio of the web position Pw to the rim width Wr, that is, L = Pw/Wr, is smaller, the outer circumference end 411 of the web 30 is farther from the flange 22, and when the ratio L is larger, the outer circumference end 411 of the web 30 is closer to the flange 22.

The ratio of the web position Pw to the rim width Wr, that is, L = Pw/Wr, is determined by the relationship to an angle $\alpha$ of the plate-thickness center line A. The ratio L of the web position Pw to the rim width Wr and the angle $\alpha$ of the plate-thickness center line A are set to satisfy the following Formula (1).

$$L \geq 0.053\alpha - 3.8626 \ldots (1)$$

The angle $\alpha$ of the plate-thickness center line A is an angle formed by the plate-thickness center line A with the axial direction when the wheel 100 is viewed in its longitudinal section. In a case where the plate-thickness center line A is a very gentle curve, the angle $\alpha$ is determined to be an angle formed by a tangential line at a center of the plate-thickness center line A (midpoint between the outer end Aa and the inner end Ab) with the axial direction. In a case where the plate-thickness center line A is a polygonal chain, the angle $\alpha$ is determined to be an angle formed by the longest segment among segments included in the plate-thickness center line A with the axial direction. It is defined that the angle $\alpha$ is 90° when the plate-thickness center line A is parallel to the radial direction. Further, it is defined that the angle $\alpha$ is less than 90° when the plate-thickness center line A is inclined with respect to the radial direction due to rotation of the plate-thickness center line A about the inner end Ab from the 90° position toward the side opposite to the flange 22. In other words, in a case where the outer end Aa of the plate-thickness center line A is disposed on the counter-flange direction side with respect to the position at which the angle $\alpha$ is 90°, the angle $\alpha$ is determined to be less than 90°.

The angle $\alpha$ of the plate-thickness center line A is set to 90° or less. The angle $\alpha$ is preferably less than 90°, which however depends on specifications of a tread brake used for the wheel 100. When the angle $\alpha$ is reduced, thus causing the web 30 to be inclined more in the counter-flange direction, constraint on the rim 20 by the web 30 is relaxed, so that deformation of the rim 20 during braking of the railway vehicle can be easily tolerated. From the viewpoint of productivity and the like of the wheel 100, the angle $\alpha$ is preferably 70° or more.

On the other hand, when the ratio L of the web position Pw to the rim width Wr is increased, thus causing the root of the web 30 for the rim 20 to approach the flange 22, constraint on the rim 20 by the web 30 is relaxed, so that deformation of the rim 20 during braking of the railway vehicle can be easily tolerated. From the viewpoint of productivity and the like of the wheel 100, the ratio L is preferably set within a range of 0.26 or more to 0.72 or less.

[Advantageous Effects]

In the wheel 100 according to the present embodiment, both the angle $\alpha$ of the plate-thickness center line A and the ratio L of the web position Pw to the rim width Wr are appropriately set in such a way as to cause constraint on the rim 20 by the web 30 to be relaxed. More specifically, in the present embodiment, the angle $\alpha$ of the plate-thickness center line A and the ratio L of the web position Pw to the rim width Wr are set to satisfy the relationship expressed by the above-mentioned Formula (1), on the assumption that the center Cb of the boss 10 is located closer to the flange 22 than the center Cr of the rim 20 and the web 30 and the plate-thickness center line A of the web 30 have a linear shape when the wheel 100 is viewed in its longitudinal section. Such a configuration can effectively reduce the degree of constraint on the rim 20 by the web 30 in the wheel 100 in which the center Cb of the boss 10 is located closer to the flange 22 than the center Cr of the rim 20 and the web 30 and the plate-thickness center line A of the web 30 have a linear shape. Thus, when the brake shoe of the tread brake is pressed against the tread 21 of the rim 20, producing frictional heat, thermal expansion of the rim 20 is less likely to be inhibited. Therefore, when the tread brake is used to apply a brake to the railway vehicle, it is possible to reduce thermal stress occurring in the rim 20 due to the tread brake and hence, it is possible to suppress plastic deformation of the rim 20. As a result, it is possible to suppress a situation in which residual stress in the rim 20 is converted to tensile residual stress after the rim 20 is cooled.

In the wheel 100 according to the present embodiment, the plate-thickness center line A of the web 30 has a linear shape and has no inflection point when the wheel 100 is viewed in its longitudinal section. In other words, the web 30 connects the boss 10 and the rim 20 without being substantially bent. As a result, compared with the case where the web 30 is bent, the weight of the web 30 can be reduced. Therefore, a reduction in weight of the wheel 100 can be achieved.

Further, since the plate-thickness center line A has a linear shape and the web 30 is not substantially bent, it is possible to reduce stress concentration in the web 30 during braking of the railway vehicle with the tread brake. Therefore, it is also possible to reduce thermal stress occurring in the web 30 during braking of the railway vehicle.

For example, in a case where the web 30 is inclined toward the flange direction side (the inner side of the track) as the web 30 extends outward in the radial direction, the web 30 has a low rigidity against a load received by the wheel 100 from the rail in the axial direction of the wheel 100, that is, a load (lateral force) by which the wheel 100 is pressed by the rail in the flange direction, when the railway vehicle passes a curve. In contrast, in the present embodiment, the angle $\alpha$ of the plate-thickness center line A is set to 90° or less and hence, there is substantially no possibility that the web 30 is inclined toward the flange direction side as the web 30 extends outward in the radial direction. Therefore, it is possible to ensure rigidity of the web 30 against a lateral force. As a result, it is possible to reduce stress occurring in the web 30.

In the wheel 100 according to the present embodiment, the angle $\alpha$ of the plate-thickness center line A is preferably less than 90°. In this case, the web 30 is inclined toward the counter-flange direction side (the outer side of the track) as the web 30 extends outward in the radial direction. Such a configuration can increase rigidity of the web 30 against a lateral force and hence, it is possible to further reduce stress occurring in the web 30.

In a case where the side faces 31 and 32 of the web 30 are parallel to the radial direction of the wheel 100 (in a case where the side faces 31 and 32 of the web 30 are perpendicular to the central axis X of the wheel 100) when the wheel 100 is viewed in its longitudinal section, the rim 20 is easily constrained by the web 30. For this reason, the side faces 31 and 32 of the web 30 are preferably inclined with respect to the radial direction of the wheel 100. Each of the side faces 31 and 32 may be inclined with respect to the radial direction in such a way as to extend toward the counter-flange direction side (the outer side of the track) as it approaches the rim 20, for example. By causing the side faces 31 and 32 to be inclined with respect to the radial direction, it is possible to further relax constraint on the rim 20 by the web 30.

In the present embodiment, the plate thickness of the web 30 decreases as the web 30 extends outward in the radial direction, and the plate thickness of the web 30 is minimized at a point inward from the outer end Aa of the plate-thickness center line A. More specifically, in the web 30, the position at which bending stress produced by a bending load received from a rail when the railway vehicle passes a curve is minimized is made to substantially coincide with the position at which the plate thickness is minimized. With this configuration, it is possible to prevent fatigue fracture of the web 30, increasing durability of the wheel 100.

The embodiment according to the present disclosure is described above, but the present disclosure is not limited to the above embodiment, and various modifications may be made without departing from the gist and scope of the present disclosure.

EXAMPLES

The present disclosure will be described below more in detail with reference to Examples. However, the present disclosure should not be construed to be limited to the Examples described below.

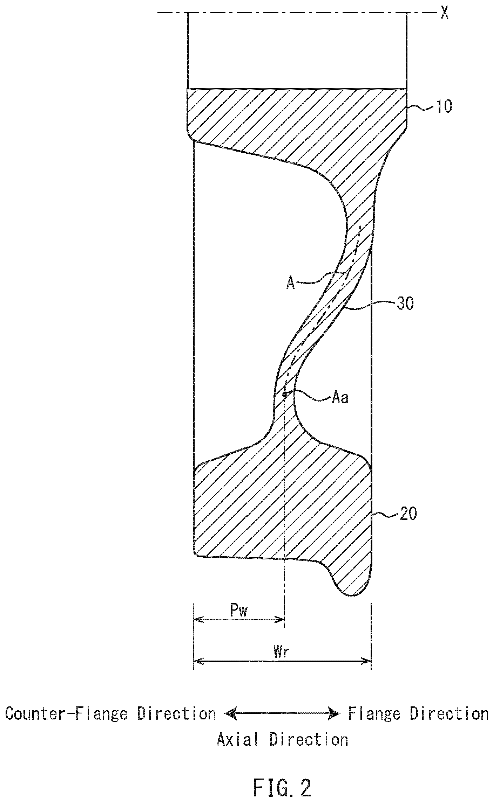

To conduct studies on a wheel shape capable of suppressing occurrence of tensile residual stress in the rim, a numerical analysis by the finite element method (FEM analysis) was conducted. In the FEM analysis, an analytic model having the same shape as that of the wheel 100 (FIG. 1) according to the above-mentioned embodiment was created, and an evaluation of residual stress in the rim was conducted on the analytic model while varying the angle (plate angle) $\alpha$ of the plate-thickness center line A having a linear shape, and while varying the ratio of the web position Pw to the rim width Wr, that is, L = Pw/Wr. An evaluation of residual stress in the rim was also conducted on an analytic model of a wheel in which a web has an S shape in cross section. FIG. 2 is a diagram schematically illustrating the wheel including the web having an S shape in cross section.

The FEM analysis was conducted with general-purpose software (ABAQUS Ver.6.14, from Dassault Systemes SE). In the analysis, to simulate braking of a railway vehicle with a tread brake, heat flux was provided, for 1200 seconds, to a region of a tread of a wheel that is to come into contact with a brake shoe of the tread brake and, thereafter, the region was cooled for 10000 seconds. An inner circumferential portion of the wheel was fully constrained and thermally insulated.

Conditions of parameters $\alpha$ and L and residual stress in the rim obtained by the FEM analysis are shown in Table 1.

[Table 1]

TABLE 1

|  | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|
| Plate Angle [$\alpha$ (°)] | 70 | 75 | 80 | 75 | 75 | 75 | S Shape | 85 | 90 | 95 |
| Web Position [Pw (mm)] | 60 | 60 | 60 | 50 | 70 | 90 | 81 | 60 | 60 | 60 |
| Web Position/Rim Width [L] | 0.48 | 0.48 | 0.48 | 0.40 | 0.56 | 0.72 | 0.65 | 0.48 | 0.48 | 0.48 |
| Weight Ratio Relative to Comparative Example 1 | 0.96 | 0.95 | 0.95 | 0.94 | 0.95 | 0.95 | 1.00 | 0.94 | 0.94 | 0.94 |
| Residual Stress (MPa) in Rim | -82.53 | -65.18 | -26.05 | -56.64 | -75.34 | -84.66 | -46.00 | 31.29 | 62.71 | 35.49 |

In Table 1, residual stress in the rim indicates the maximum stress in the circumferential direction in the rim after braking and cooling. A negative value for residual stress in the rim indicates that compressive residual stress in the rim remained even after braking. A positive value for residual stress in the rim indicates that residual stress in the rim was converted to tensile residual stress after braking.

As shown in Table 1, in each of Examples 1 to 6, residual stress in the rim had a negative value. In other words, in Examples 1 to 6, thermal stress in the rim during braking that simulated a tread brake was reduced and hence, compressive residual stress in the rim remained even after braking. In contrast, in each of Comparative Examples 2 to 4, residual stress in the rim had a positive value. In other words, in each of Comparative Examples 2 to 4, the result was that residual stress in the rim is converted to tensile residual stress after braking. In Comparative Example 1, although residual stress in the rim had a negative value, due to bending of the web, the weight of the wheel was increased compared with Examples 1 to 6 and Comparative Examples 2 to 4 in which the web is not bent. In this manner, in Examples 1 to 6, occurrence of tensile residual stress in the rim was suppressed without increasing the weight of the wheel.

Hereinafter, studies are conducted on an influence of plate angle $\alpha$ and ratio L of web position Pw to rim width Wr on residual stress in a rim.

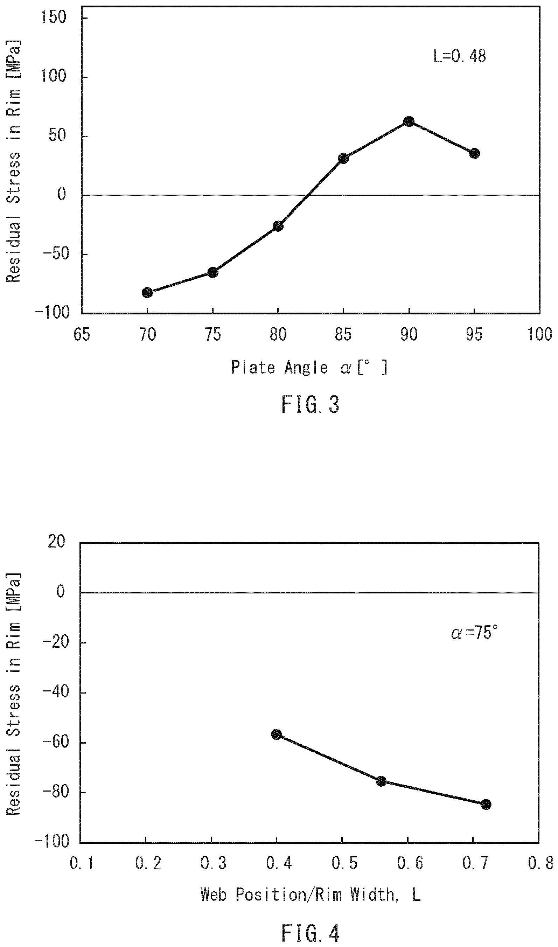

FIG. 3 is a graph illustrating the relationship between plate angle $\alpha$ and residual stress in a rim in each of Examples 1 to 3 and Comparative Examples 2 to 4, which have the same value of ratio L of web position Pw to rim width Wr. It can be understood from FIG. 3 that when the plate angle $\alpha$ is 90° or less, the value of residual stress in the rim increases as the plate angle $\alpha$ increases. Therefore, it can be regarded that when the plate angle $\alpha$ is small, there is a reduced possibility of conversion of residual stress in the rim to tensile residual stress after a brake is applied to the railway vehicle.

FIG. 4 is a graph illustrating the relationship between ratio L of web position Pw to rim width Wr and residual stress in a rim in each of Examples 4 to 6, which have the same plate angle $\alpha$. It can be understood from FIG. 4 that even with the same plate angle $\alpha$, the value of residual stress in the rim decreases as ratio L of web position Pw to rim width Wr increases. Therefore, it can be regarded that when the ratio L is increased, there is a reduced possibility of conversion of residual stress in the rim to tensile residual stress after a brake is applied to the railway vehicle.

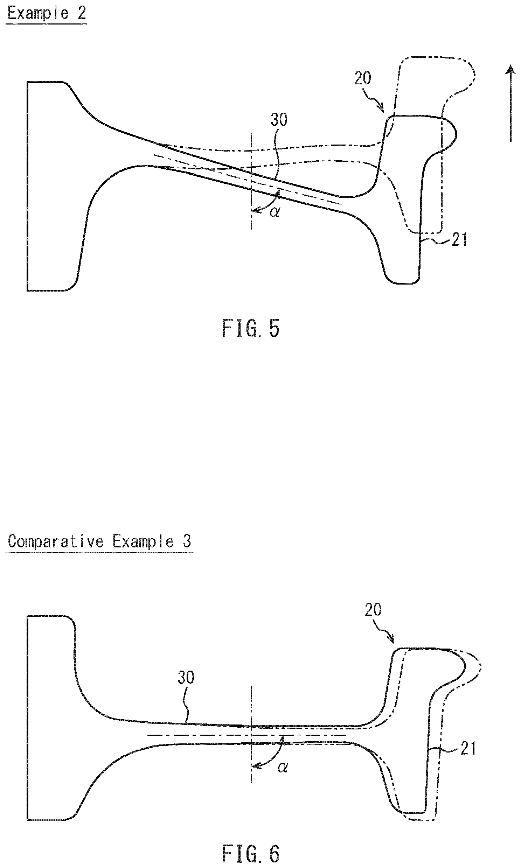

As described above, in the above-mentioned analysis, it was confirmed that there is a tendency for a smaller plate angle $\alpha$ to cause a greater reduction in residual stress in the rim, and also for a larger ratio L of the web position Pw to the rim width Wr to cause a greater reduction in residual stress in the rim. The reason of such a tendency will be described with reference to FIG. 5 and FIG. 6. FIG. 5 is a diagram illustrating, in an exaggerated manner, deformation occurring in a wheel during braking in Example 2, and FIG. 6 is a diagram illustrating, in an exaggerated manner, deformation occurring in a wheel during braking in Comparative Example 3.

In Example 2, the plate angle $\alpha$ is 75°, and ratio L of web position Pw to rim width Wr is 0.48. In Example 2, as illustrated in FIG. 5, the rim 20 was significantly moved in the flange direction when heat flux was provided to the tread 21. In other words, in Example 2, the web 30 caused small constraint in regard to movement of the rim 20 in the flange direction, so that thermal expansion of the rim 20 was tolerated. In Example 2, thermal stress occurring in the rim 20 during braking was reduced and hence, compressive residual stress in the rim 20 remained even after braking.

In Comparative Example 3, although ratio L of web position Pw to rim width Wr is equal to that in Example 2, plate angle $\alpha$ is 90°, that is, plate angle $\alpha$ is larger than that in Example 2. In Comparative Example 3, as illustrated in FIG. 6, there was almost no movement of the rim 20. In Comparative Example 3, the web 30 caused large constraint in regard to movement of the rim 20, so that thermal expansion of the rim 20 was inhibited when heat flux was provided to the tread 21. In Comparative Example 3, thermal stress occurring in the rim 20 during braking was large, so that residual stress in the rim 20 was converted to tensile residual stress after braking.

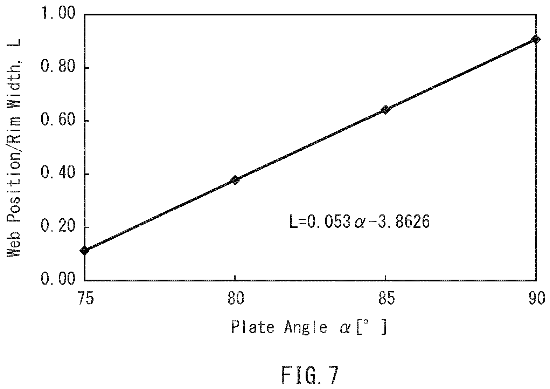

As described above, even when wheels have the same ratio L of web position Pw to rim width Wr, residual stress occurs differently in the rims 20 due to a difference in plate angle $\alpha$. In the same manner, even when wheels have the same plate angle $\alpha$, residual stress occurs differently in the rims 20 due to a difference in ratio L of web position Pw to rim width Wr. In other words, both plate angle $\alpha$ and ratio L of web position Pw to rim width Wr relate to conversion of residual stress in the rim to tensile residual stress, occurring due to braking with a tread brake. In view of the above, the relationship between plate angle $\alpha$ and ratio L was obtained that can prevent conversion of residual stress in the rim to tensile residual stress at the time of applying a brake to the railway vehicle with the tread brake. In the relationship between plate angle $\alpha$ and ratio L, a limit line up to which residual stress in the rim is not converted to tensile residual stress is illustrated in FIG. 7.

Plot points in FIG. 7 are results obtained by performing an FEM analysis substantially equivalent to the above-mentioned FEM analysis, and show L = web position Pw/rim width Wr when residual stress in the rim is zero with the plate angle $\alpha$ set to 75°, 80°, 85°, and 90°. A straight line in FIG. 7 is obtained by approximating these plot points by least squares, and shows L = 0.053$\alpha$ - 3.8626. In a region above this straight line, residual stress in the rim is converted to compressive residual stress. Therefore, a case where it is possible to substantially prevent residual stress in the rim from being converted to tensile residual stress is a case where plate angle $\alpha$ and ratio L satisfy the following Formula (1). However, the plate angle $\alpha$ is determined to be 90° or less. The following Formula (1) is applicable only to a wheel in which the center of a boss is disposed closer to a flange than the center of a rim, and a web and the plate-thickness center line of the web have a linear shape.

$$L \geq 0.053\alpha - 3.8626 \ldots (1)$$

Whether the above-mentioned Formula (1) is satisfied was confirmed for each of Examples and Comparative Examples. As shown in Table 2, the above-mentioned Formula (1) is satisfied in each of Examples 1 to 6 in which residual stress in the rim has a negative value. In contrast, the above-mentioned Formula (1) is not satisfied in each of Comparative Examples 2 to 4 in which residual stress in the rim has a positive value. Therefore, it can be regarded that, when plate angle $\alpha$ and ratio L of web position Pw to rim width Wr are set to satisfy the above-mentioned Formula (1) in the wheel in which the center of the boss is disposed closer to the flange than the center of the rim and the web and the plate-thickness center line of the web have a linear shape, it is possible to suppress occurrence of tensile residual stress in the rim.

[Table 2]

TABLE 2

| | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|
| Plate Angle [$\alpha$(°)] | 70 | 75 | 80 | 75 | 75 | 75 | S Shape | 85 | 90 | 95 |
| Web Position/Rim Width [L] | 0.48 | 0.48 | 0.48 | 0.40 | 0.56 | 0.72 | 0.65 | 0.48 | 0.48 | 0.48 |
| $0.053\alpha$-3.8626 | -0.1526 | 0.1124 | 0.3774 | 0.1124 | 0.1124 | 0.1124 | - | 0.6424 | 0.9074 | 1.1724 |
| L≥$0.053\alpha$-3.8626 | YES | YES | YES | YES | YES | YES | - | NO | NO | NO |

REFERENCE SIGNS LIST

100: wheel
10: boss
20: rim
21: tread
22: flange
30: web
A: plate-thickness center line

**Claims**

1. A wheel to be used in a railway vehicle, the wheel comprising:

   a boss that forms an inner circumferential portion of the wheel and into which an axle of the railway vehicle is to be inserted;
   a rim that forms an outer circumferential portion of the wheel and includes a tread to come into contact with a top surface of a rail on which the railway vehicle travels and a flange protruding outward from the tread in a radial direction of the wheel; and
   a web that has an annular shape and connects the boss and the rim, wherein
   a center of the boss in an axial direction is disposed closer to the flange in the axial direction than a center of the rim in the axial direction, the axial direction being a direction in which a central axis of the wheel extends,
   the web has a plate-thickness center line having a linear shape when the wheel is viewed in a longitudinal section, and
   in a case where an angle that is formed by the plate-thickness center line with the axial direction is taken as $\alpha$, the angle being defined to be 90° when the plate-thickness center line is parallel to the radial direction, the angle being defined to be less than 90° when the plate-thickness center line is inclined with respect to the radial direction due to rotation of the plate-thickness center line about an inner end in the radial direction from a 90° position toward a side opposite to the flange, and
   in a case where, of both side faces of the rim in the axial direction, a distance in the axial direction from a side face on the side opposite to the flange to an outer end of the plate-thickness center line in the radial direction is taken as Pw, a length of the rim in the axial direction is taken as Wr, and Pw/Wr is taken as L, a following Formula (1) is satisfied.

$$L \geq 0.053\alpha - 3.8626 \ldots (1)$$

   where the angle $\alpha$ is 90° or less.

2. The wheel according to claim 1, wherein
   the angle $\alpha$ is less than 90°.

3. The wheel according to claim 1 or 2, wherein
   the web has a plate thickness that decreases as the web extends outward in the radial direction until a point inward from the outer end of the plate-thickness center line and has a minimum plate thickness at the point.

FIG. 1

Counter-Flange Direction ←——————→ Flange Direction

Axial Direction

FIG. 2

FIG. 3

FIG. 4

Example 2

FIG. 5

Comparative Example 3

FIG. 6

FIG. 7

<table>
<tr><td colspan="2">**INTERNATIONAL SEARCH REPORT**</td><td>International application No.<br>**PCT/JP2022/033336**</td></tr>
</table>

**A. CLASSIFICATION OF SUBJECT MATTER**

***B60B 17/00***(2006.01)i
FI: B60B17/00 F; B60B17/00 B

According to International Patent Classification (IPC) or to both national classification and IPC

**B. FIELDS SEARCHED**

Minimum documentation searched (classification system followed by classification symbols)

B60B17/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/241401 A1 (NIPPON STEEL CORPORATION) 03 December 2020 (2020-12-03)<br>paragraphs [0019]-[0035], [0045], fig. 1 | 1-3 |
| A | JP 2021-109525 A (NIPPON STEEL CORPORATION) 02 August 2021 (2021-08-02)<br>entire text, all drawings | 1-3 |
| A | JP 2004-131002 A (SUMITOMO METAL IND LTD) 30 April 2004 (2004-04-30)<br>entire text, all drawings | 1-3 |
| A | JP 10-119503 A (SUMITOMO METAL IND LTD) 12 May 1998 (1998-05-12)<br>entire text, all drawings | 1-3 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 November 2022** | **22 November 2022** |

| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br>Telephone No. |

Form PCT/ISA/210 (second sheet) (January 2015)

INTERNATIONAL SEARCH REPORT
Information on patent family members

International application No.

**PCT/JP2022/033336**

| Patent document cited in search report | | | Publication date (day/month/year) | Patent family member(s) | | | Publication date (day/month/year) |
|---|---|---|---|---|---|---|---|
| WO | 2020/241401 | A1 | 03 December 2020 | US 2022/0212494 A1 paragraphs [0023]-[0040], table 1, fig. 1 EP 3978265 A1 paragraphs [0019]-[0035], [0045], fig. 1 CN 113891806 A | | | |
| JP | 2021-109525 | A | 02 August 2021 | (Family: none) | | | |
| JP | 2004-131002 | A | 30 April 2004 | (Family: none) | | | |
| JP | 10-119503 | A | 12 May 1998 | US 6033001 A entire text, all drawings EP 836954 A2 entire text, all drawings | | | |

Form PCT/ISA/210 (patent family annex) (January 2015)

**EP 4 424 521 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10119503 A
- JP 2009545484 W